# EUROPÄISCHE PATENTSCHRIFT

(11) **EP 0 475 909 B1**
(45) Veröffentlichungstag und Bekanntmachung des Hinweises auf die Patenterteilung: **25.08.1993**
(21) Anmeldenummer: 91810723.6
(22) Anmeldetag: 10.09.1991
(51) Int. Cl.: B65G 65/46, B65B 1/12, B65G 33/22, B65G 33/24

(54) **Schneckenförderer**
Screw conveyor
Transporteur à vis

(30) Priorität: 14.09.1990 CH 2995/90
(43) Veröffentlichungstag der Anmeldung: 18.03.1992
(73) Patentinhaber: K-TRON TECHNOLOGIES, INC., Wilmington, DE 19801 (US)
(72) Erfinder: Lehmann, Rolf, CH-5703 Seon (CH); Hodel, Reinhold, CH-5036 Oberentfelden (CH)
(74) Vertreter: Eder, Carl E.

(56) Entgegenhaltungen:
- CH-A- 321 358
- DE-B- 1 148 489
- DE-B- 1 813 219
- US-A- 4 222 502

## Beschreibung

Ein Schneckenförderer weist eine Förderschnecke auf, die in einem feststehenden Rohr drehbar angeordnet ist. Das Rohr selbst ist irgendwo mit einer mehr oder weniger grossen Einfüllöffnung versehen. Ein solcher Schneckenförderer (siehe z.B. CH-A-321 358) fördert staub- oder granulatförmiges Gut mit grosser Regelmässigkeit, sodass er sich auch als Dosiervorrichtung verwenden lässt. Bei kleinen Fördermengen, also z.B. bei Fördermengen in der Grössenordnung von 50 g/h, d.h. ca. 1 g/min., sind zwischen zwei Schneckenwindungen nur sehr kleine Mengen des zu fördernden Gutes vorhanden. Daraus resultiert dann eine portionenweise Abgabe, sodass die Dosiergenauigkeit zwar über grosse Zeiträume immer noch vorhanden ist, aber über kleine Zeiträume mit grosser Genauigkeit periodische Schwankungen grosser Amplitude auftreten, was zur Folge hat, dass ein Schneckenförderer für die Feindosierung überall dort nicht zum Einsatz gelangen kann, wo bei kleinen Fördermengen nicht nur in grossen Zeiträumen sondern auch in kurzen Zeitspannen eine grosse Konstanz der Förderleistung, also der pro Zeiteinheit geförderten Menge, benötigt wird. Diesen erhöhten Anforderungen genügt nun der Schneckenförderer mit einer wenigstens angenähert horizontalachsigen Förderschnecke nach der vorliegenden Erfindung, der sich von den üblichen Schneckenförderern dadurch unterscheidet, dass das Auslaufende des feststehenden Rohres von einem drehbar gelagerten und mit einer zur Drehgeschwindigkeit der Schnecke proportionalen Drehgeschwindigkeit angetriebenen, einseitig offenen Rohr umgeben ist. Wenigstens angenähert horizontalachsig heisst in diesem Zusammenhang, dass die Achse der Schnecke horizontal verläuft oder mit der Horizontalen einen Winkel von höchstens 30° bildet. Eine besonders einfache Konstruktion lässt sich dadurch erreichen, wenn man das drehbar gelagerte Rohr mit der Schnecke drehfest verbindet, sodass es sich mit gleicher Drehgeschwindigkeit wie diese dreht.

Nachfolgend wird anhand der beiliegenden Zeichnung ein Ausführungsbeispiel der Erfindung beschrieben. In der Zeichnung zeigt
die Fig. 1 eine perspektivische Darstellung eines erfindungsgemässen Schneckenförderers,
die Fig. 2 ein feststehendes Rohr, teilweise in Ansicht, teilweise im Längsschnitt,
die Fig. 3 einen Schnitt nach der Linie III-III der Fig. 4,
die Fig. 4 einen Längsschnitt durch das drehbar gelagerte Rohr,
die Fig. 5 - 7 je einen Teil eines Längsschnitts durch eine Variante der Mündung des drehbar gelagerten Rohres.

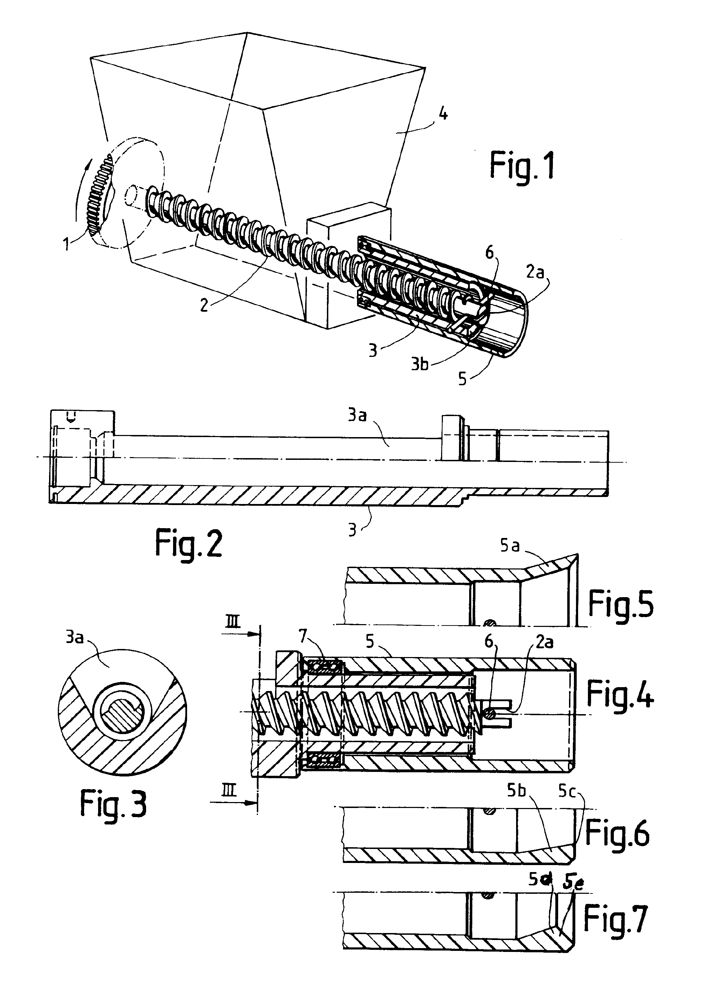

Der in der Fig. 1 als Ganzes dargestellte Schneckenförderer weist als wesentliche Bestandteile eine durch ein Zahnrad 1 angetriebene, einseitig in einem nicht dargestellten Lager horizontalachsig gelagerte Schnecke 2, ein diese Schnecke koaxial umgebendes, mit einer Einfüllöffnung 3a versehenes, feststehendes Rohr 3 und einen zum Zuführen des zu fördernden Gutes dienenden Trichter 4 auf. Bei konstanter Drehgeschwindigkeit fördert die Schnecke mit konstanter Förderleistung das Schüttgut aus dem Trichter 4 zum offenen Ende 3b des feststehenden Rohres 3. Wenn es sich um eine kleine Förderleistung handelt, werden sich zwischen den einzelnen Windungen Schüttguthäufchen gleicher Grösse bilden, sodass, wie bei Schneckenförderern dieser Art an sich bekannt ist, beim Auslaufende 3b nicht eine zeitlich konstante Materialabgabe erfolgt, sondern eine in Funktion der Zeit periodisch schwankende Fördermenge.

Zur Vermeidung dieses Nachteils, also zum Zwecke, einen derartigen Schneckenförderer nicht nur zum gewöhnlichen Dosieren sondern auch zum Feindosieren, also zur zeitlich konstanten Abgabe von kleinsten Materialmengen, in der Grössenordnung von 1 g/min und weniger, benützen zu können, ist das Auslaufende 3b des feststehenden Rohres 3 von einem Rohr 5 umgeben, das mittels eines Kugellagers 7 auf dem feststehenden Rohr 3 drehbar gelagert ist. Es ist mit einem Querbolzen 6 versehen, der durch einen am freien Ende der Schnecke 2 angebrachten Schlitz 2a hindurchgeführt ist. Auf diese an sich konstruktiv sehr einfache Art und Weise wird sichergestellt, dass sich das drehbar gelagerte, einseitig offene Rohr 5 mit der gleichen Drehgeschwindigkeit dreht wie die Schnecke 2. Natürlich wäre es auch möglich, das Rohr von aussen anzutreiben, es also beispielsweise mit einem Zahnkranz zu versehen und durch den gleichen Motor, der zum Antrieb des starr mit der Schnecke 2 verbundenen Zahnrades 1 dient, anzutreiben, sodass die Drehgeschwindigkeit des Rohres 5 zur Drehgeschwindigkeit der Schnecke 2 proportional ist. Das Schüttgut, das durch die Schnecke 2 mit einer sehr genauen Periodizität, deren Dauer der Dauer einer Schneckenumdrehung entspricht, vom feststehenden Rohr 3 in das drehbar gelagerte Rohr 5 gefördert wird, wird nun überraschenderweise durch das sich drehende Rohr so verteilt, dass es aus diesem drehbar gelagerten Rohr 5 mit einer sehr grossen Gleichmässigkeit, also ohne periodische Schwankungen, austritt.

Dieses drehbar gelagerte Rohr muss nicht unbedingt, wie das in den Fig. 1 und 4 dargestellt ist, eine genau zylindrische Innenfläche aufweisen. Es kann auch, wie das in der Fig. 5 dargestellt ist, einen Endabschnitt mit sich gegen das Ende hin vergrösserndem Durchmesser, also eine sich nach aussen konisch erweiternde Innenfläche 5a besitzen. Es ist aber auch möglich, im Endabschnitt 5b den Innendurchmesser in der Richtung zum offenen Ende hin konstant abnehmen zu lassen und zwar entweder bis zur Abgabekante 5c, wie das in der Fig. 6 dargestellt ist, oder an den Abschnitt 5d mit abnehmendem Innendurchmesser noch einem Abschnitt 5e mit zunehmendem Innendurchmesser anzuschliessen, wie das in der Fig. 7 dargestellt ist.

In der Zeichnung ist die Innenfläche des drehbar gelagerten Rohres 5 vollkommen glatt dargestellt. Man kann nun diese Innenfläche auch ganz oder mindestens in der Nähe des Auslaufendes des feststehenden Rohres 3 mit einer Rillung 5 versehen. Diese Rillung kann beispielsweise aus sich kreuzenden Rillen bestehen, die zusammen eine Rändelung bilden. Die Rillung kann aber auch aus einer oder mehreren schraubenlinienförmig verlaufenden Rillen gebildet werden, die so geführt sind, dass sie Schüttgut, das aus dem feststehenden Rohr 3 in sie gefallen ist, in der Richtung entgegen der Förderrichtung der Förderschnecke 2 fördern. Dadurch lässt sich auch bei kleinsten Fördergeschwindigkeiten eine extrem hohe Gleichmässigkeit der Schüttgutabgabe erreichen.

## Patentansprüche

1. Schneckenförderer mit einer in einem feststehenden mit einer Einfüllöffnung (3a) versehenen Rohr (3) drehbar angeordneten, wenigstens angenähert horizontalachsigen Förderschnecke (2), dadurch gekennzeichnet, dass das Auslaufende (3b) des feststehenden Rohres (3) von einem drehbar gelagerten und mit einer zur Drehgeschwindigkeit der Schnecke (2) proportionalen Drehgeschwindigkeit angetriebenen, einseitig offenen Rohr (5) umgeben ist.

2. Schneckenförderer nach Anspruch 1, dadurch gekennzeichnet, dass das drehbar gelagerte Rohr (5) mit der Schnecke (2) drehfest verbunden ist.

3. Schneckenförderer nach Anspruch 1 oder 2, dadurch gekennzeichnet, dass das drehbar gelagerte Rohr (5) eine zylindrische Innenfläche aufweist.

4. Schneckenförderer nach Anspruch 1 oder 2, dadurch gekennzeichnet, dass der Innendurchmesser des drehbar gelagerten Rohres (5) gegen das offene Ende hin zunimmt.

5. Schneckenförderer nach Anspruch 1 oder 2, dadurch gekennzeichnet, dass der Innendurchmesser des drehbar gelagerten Rohres (5) gegen das offene Ende hin abnimmt.

6. Schneckenförderer nach Anspruch 5, dadurch gekennzeichnet, dass der Innendurchmesser des drehbar gelagerten Rohres (5) im letzten Abschnitt vor dem offenen Rohrende wieder zunimmt.

7. Schneckenförderer nach einem der Ansprüche 1 - 6, dadurch gekennzeichnet, dass die Innenfläche des drehbar gelagerten Rohres mindestens in der Nähe des Auslaufendes des feststehenden Rohres eine Rillung aufweist.

8. Schneckenförderer nach Anspruch 7, dadurch gekennzeichnet, dass die Rillung eine Rändelung ist.

9. Schneckenförderer nach Anspruch 7, dadurch gekennzeichnet, dass die Rillung aus mindestens einer schraubenlinienförmig verlaufenden Rille gebildet wird, die so verläuft, dass in sie gefallenes Schüttgut entgegen der Förderrichtung der Förderschnecke gefördert wird.

## Claims

1. Screw conveyor with a conveying screw (2) which is rotatably arranged in a fixed tube (3) provided with a filling opening (3a) and the axis of which is at least approximately horizontal, characterised thereby that the discharge end (3b) of the fixed tube (3) is surrounded by a rotatably mounted tube (5) which is driven at a rotational speed proportional to the rotational speed of the screw (2) and which is open at one end.

2. Screw conveyor according to claim 1, characterised thereby that the rotatably mounted tube (5) is non-rotatably connected with the screw (2).

3. Screw conveyor according to claim 1 or 2, characterised thereby that the rotatably mounted tube (5) has a cylindrical inner surface.

4. Screw conveyor according to claim 1 or 2, characterised thereby that the inside diameter of the rotatably mounted tube (5) increases toward the open end.

5. Screw conveyor according to claim 1 or 2, characterised thereby that the inside diameter of the rotatably mounted tube (5) decreases toward the open end.

6. Screw conveyor according to claim 5, characterised thereby that the inside diameter of the rotatably mounted tube (5) increases again in the last segment before the open end.

7. Screw conveyor according to one of claims 1 to 6, characterised thereby that the inner surface of the rotatably mounted tube has a grooving at least in the vicinity of the discharge end of the fixed tube.

8. Screw conveyor according to claim 7, characterised thereby that the grooving is a knurling.

9. Screw conveyor according to claim 7, characterised thereby that the grooving is formed from at least one helically extending groove which so extends that loose material falling into it is conveyed counter to the conveying direction of the conveying screw.

## Revendications

1. Convoyeur à vis comportant une vis transporteuse sans fin (2) ayant un axe au moins approximativement horizontal et qui est placée de manière à tourner dans un tuyau fixe (3) muni d'un orifice d'alimentation (3a), caractérisé en ce que l'extrémité de sortie (3b) du tuyau fixe (3) est entourée par un tuyau (5) ouvert d'un côté, monté rotatif et entraîné à une vitesse de rotation proportionnelle à la vitesse de rotation de la vis sans fin (2).

2. Convoyeur à vis selon la revendication 1, caractérisé en ce que le tuyau (5) monté rotatif est solidaire en rotation de la vis sans fin (2).

3. Convoyeur à vis selon la revendication 1 ou 2, caractérisé en ce que le tuyau (5) monté rotatif présente une surface interne cylindrique.

4. Convoyeur à vis selon la revendication 1 ou 2, caractérisé en ce que le diamètre intérieur du tuyau (5) monté rotatif augmente en direction de l'extrémité ouverte.

5. Convoyeur à vis selon la revendication 1 ou 2, caractérisé en ce que le diamètre intérieur du tuyau (5) monté rotatif diminue en direction de l'extrémité ouverte.

6. Convoyeur à vis selon la revendication 5, caractérisé en ce que le diamètre intérieur du tuyau (5) monté rotatif augmente à nouveau dans le dernier tronçon avant l'extrémité ouverte du tuyau.

7. Convoyeur à vis selon l'une quelconque des revendications 1 à 6, caractérisé en ce que la surface interne du tuyau monté rotatif présente un rainurage au moins à proximité de l'extrémité de sortie du tuyau fixe.

8. Convoyeur à vis selon la revendication 7, caractérisé en ce que le rainurage est un moletage.

9. Convoyeur à vis selon la revendication 7, caractérisé en ce que le rainurage est constitué par au moins une rainure s'étendant sous forme d'une hélice et qui s'étend de telle manière que les matières en vrac tombées en elle sont acheminées dans le sens inverse du sens d'acheminement de la vis transporteuse sans fin.
